# EUROPÄISCHE PATENTSCHRIFT

(11) **EP 0 932 826 B1**
(45) Veröffentlichungstag und Bekanntmachung des Hinweises auf die Patenterteilung: **28.05.2003**
(21) Anmeldenummer: 97953675.2
(22) Anmeldetag: 17.10.1997
(51) Int. Cl.: G01N 21/89

(54) **VERFAHREN FÜR DIE ERMITTLUNG VON OPTISCHEN FEHLERN IN GROSSFLÄCHIGEN SCHEIBEN**
METHOD FOR DETECTING OPTICAL ERRORS IN LARGE SURFACE PANELS
PROCEDE DE DETECTION D'ERREURS OPTIQUES DANS DES PLAQUES A GRANDE SURFACE

(30) Priorität: 18.10.1996 DE 19643017
(43) Veröffentlichungstag der Anmeldung: 04.08.1999
(60) Teilanmeldung: 02021500.0
(73) Patentinhaber: Innomess Gesellschaft für Messtechnik MBH, 45768 Marl (DE)
(72) Erfinder: PINGEL, Ulrich, D-45770 Marl (DE); NIEPEL, Christian, D-45701 Herten (DE)
(74) Vertreter: Sparing, Rolf Klaus
(86) Internationale Anmeldenummer: EP9705731
(87) Internationale Veröffentlichungsnummer: WO98017993

(56) Entgegenhaltungen:
- EP-A- 0 416 302
- EP-A- 0 484 237
- EP-A- 0 559 524
- EP-A- 0 576 011
- EP-A- 0 726 457
- US-A- 4 310 242
- US-A- 5 343 288

## Beschreibung

Die Erfindung betrifft ein Verfahren nach dem Oberbegriff des Anspruchs 1.

EP-A-0 416 302 zeigt ein Verfahren, bei dem ein beleuchtetes Flächenraster über ein Objektiv auf ein Referenzraster abgebildet, eine zu überprüfende Scheibe in den Strahlengang zwischen Flächenraster und Referenzraster angeordnet und das Superponat aus dem Bild des Flächenrasters und dem Referenzraster untersucht wird, dabei wird das Flächenraster auf ein Referenzraster abgebildet, dessen Flächengröße kleiner ist als die zu untersuchende Scheibe, und das Superponat wird durch eine Videokamera mehrfach aufgenommen, um anschließend mit einem Phasenshiftverfahren ausgewertet zu werden, wobei die aufgenommene Helligkeitsverteilung als Maß für die Brechkraft der Scheibe dient.

Die Durchführung dieses Verfahrens ist ausgesprochen aufwendig. Bei dem Flächenraster handelt es sich im allgemeinen in der Praxis um ein Kreuzraster, das gebildet wird aus alternierenden opaken Streifen und transparenten Streifen, wobei die transparenten Streifen genau so breit sind wie die opaken Streifen, wobei zwei derartige Streifenmuster um 90° versetzt einander überlagert sind. Die zu untersuchende Scheibe wird in den Strahlengang angeordnet und auf das Referenzraster, bei dem es sich um ein Linienraster handelt, das ebenfalls transparente und opake Linien anordnet, und zwar in demselben Breitenverhältnis wie das Flächenraster, abgebildet. Ein erstes praktisches Problem entsteht dann, wenn sich Linien der beiden Raster exakt decken; um diesem Fall vorzubeugen, werden in der Praxis als Flächenraster in der Regel nicht opake Linien verwendet, sondern halbopak, halbdurchlässige Linien. Dadurch wird der Kontrast herabgesetzt.

Um eine Auswertung des sich ergebenden Moiré-Bildes nach dem Phasenshiftverfahren zu ermöglichen, ist es erforderlich, das Superponat des auf das Referenzraster abgebildeten Flächenrasters dreimal abzubilden. Hierbei muß das Referenzraster zweimal um jeweils ein Drittel der Breite eines Linienpaares verschoben werden, so daß im Ganzen mindestens drei Aufnahmen erforderlich sind, um die Phasenverschiebung in einer Dimension (z.B. der Horizontalen) der Scheibe zu ermitteln. Wird in einer senkrecht dazu verlaufenden Dimension (z.B. der Vertikalen) ebenfalls die Ermittlung der Brechkraft der Scheibe gewünscht, müssen von einem zweiten Referenzraster erneut drei Aufnahmen von dem sich ergebenden Moiré-Bild gemacht werden. Es sind also insgesamt sechs Aufnahmen erforderlich, damit mit dem Phasenshiftverfahren die Brechkraft der Scheibe ermittelt werden kann.

Die Vorrichtung zur Durchführung des Verfahrens ist. dementsprechend aufwendig, da die Verschiebung des Referenzrasters um ein Drittel der Breite eines Linienpaars auf dem Referenzraster sehr präzise erfolgen muß. Dasselbe gilt für die zweite, zur ersten senkrechten Aufnahme, da es schwierig zu vermeiden ist, daß aufgrund von Positionierungsfehlern ein unerwünschter Moiré-Effekt auftritt. Aufgrund der aufwendigen Handhabung nimmt die Messung der Brechkraft viel Zeit in Anspruch.

Zusätzlich kann es bei dem bekannten Verfahren zu unerwünschten Moiré-Bildungen an der "Pixel-Periode" der Kamera (vgl. Sp. 4, Z. 36 - 40) kommen, wenn das Beleuchtungsmuster oder das Referenzmuster das Vielfache einer Periode der Pixel ausmachen. Es müssen daher Maßnahmen ergriffen werden, das Auftreten dieser Konstellation zu vermeiden, denn diese unerwünschten zusätzlichen Moiré-Bilder verfälschen die Auswertung des Bildes der Scheibe.

EP-A-0 559 524 zeigt ein anderes Verfahren, nämlich zur Prüfung der Transparenz insbesondere von Verbundglas nach dem Vorverbund und vor dem Autoklavieren, also zu einem Zeitpunkt, an dem der Vorverbund bzw. die Folie in der Regel eine milchige Farbe aufweist, die die Lichttransmission behindert. Dieses Transmissionsverfahren ordnet eine Lichtquelle einerseits (unterhalb) und eine Kamera zur Beobachtung des erzeugten Prüfbilds andererseits des Vorverbunds an. Das durch die Lichtquelle erzeugte und projizierte Prüfbild ist ein Linienmuster von einigen wenigen Linien. Als Grundlage der Entscheidung, ob eine Verbundglasscheibe "gut" oder "schlecht" ist, dient ein Mittelwert aus allen beobachteten Werten. Eine bestimmte Abbildungsregel der Linien auf die Kamera bzw. deren Pixel ist nicht vorgeschlagen. Auch ist es nicht möglich, Fehler in der Brechkraft, kleine Einschlüsse und dergl. zu detektieren, da sie den gemessenen Mittelwert über das gesamte beobachtete Bild nur minimal beeinflussen.

Die mathematischen Ableitungen von Winkeln ausgehend von gemessenen Moiré-Bildern sowie einen Überblick über die verschiedenen Moiré-Techniken gibt der Aufsatz von Selb, M., und Höfler, H. in "Vision & Voice Magazine", Band 4 (1990), Nr. 2, Seiten 145-151. In diesem Aufsatz werden auch hochauflösende Moiré-Topographiemessungen durch unmittelbar auf einen CCD-Chip abgebildete Gitter, also in einer einstufigen Abbildung ohne Referenzgitter, behandelt.

EP-A-0 484 237 beschreibt eine Vorrichtung und ein Verfahren zur Messung der optischen Eigenschaften einer Scheibe, insbesondere einer Windschutzscheibe, bei dem durch eine Windschutzscheibe mittels einer speziellen Kamera ein Muster, vorliegend ein Kreuzgitter, das von einem Raster erzeugt wird, beobachtet wird. Für die Beobachtung des Musters durch die Windschutzscheibe hindurch wird eine Zeilenkamera mit 3.456 Pixeln verwendet. Die Auswertung des beobachteten Bildes beruht auf einer Auswertung der eingeschlossenen Rechtecke des Kreuzgitters, unter Berücksichtigung der Diagonalen der eingeschlossenen Rechtecke. Darüber hinaus speichert ein Pixelortungskreis die Hell-dunkel- bzw. die Dunkel-hell-Übergänge. Bei der Auswertung werden die hellen bzw. dunklen Bereiche lokalisiert und auf diese Weise in der Art eines Gitters die optischen Eigenschaften der Scheibe durch eine Rechnereinheit bestimmt.

EP-A-0 726 457 beschreibt Vorrichtung und Verfahren zur Prüfung von Scheiben aus transparentem Material. Hierbei sind beiderseits beispielsweise eines endlos laufenden Glasbandes am Floatausgang einerseits eine Lichtquelle mit einer Hell-Dunkel-Musterung und andererseits des Glasbandes mehrere nebeneinander angeordnete Kameras, die das Rasterbild beobachten, um Fehler zu detektieren, angeordnet. Zur Auswertung des Bildes wird die Kamera derart eingestellt, daß sie nur ein sehr unscharfes Bild erfaßt. In Abhängigkeit von der Art der Fehler (Verunreinigung oder Distorsion) wird ein bestimmtes Signal bzw. eine Änderung im Signal des beobachteten Bildes erfaßt. Die erfaßten Signale erlauben Rückschlüsse auf die Art des Fehlers.

Es ist die Aufgabe der Erfindung, ein Verfahren nach dem Oberbegriff des Anspruchs 1 anzugeben, mit dem optische Fehler in wenigstens einer Dimension einer Scheibe mit geringem Aufwand ermittelbar sind.

Diese Aufgabe wird bei dem eingangs genannten Verfahren mit den kennzeichnenden Merkmalen des Anspruchs 1 gelöst.

Eine Sequenz des Musters kann durch eine periodische Folge von zwei oder mehr Lichtintensitäten definiert sein. Im einfachsten Fall handelt es sich um eine Folge, in der helle und dunkle Streifen, vorzugsweise identischer Breite, einander abwechseln und eine Hell-Dunkel-Sequenz bilden. Es ist aber auch möglich, daß die Sequenz aus drei, vier oder mehr Streifen besteht, die eine regelmäßige Abfolge mit stets äquidistanten Intensitätsminima und -maxima aufweist.

Für die Erzeugung dieser Sequenzen ist es zum einen möglich, die Lichtintensitäten durch die örtlichen Lichtdurchlässigkeiten eines physischen Rasters mittels einer hinter dem Raster angeordneten Lichtquelle zu erzeugen. Ist das Raster opak, beträgt die Lichtintensität Null, die Stelle ist dunkel; ist das Raster vollständig transparent, nimmt die Lichtintensität ein Maximum an. Die Verwendung eines physischen Rasters wie im Stand der Technik, also vergleichbar einem großen Sieb oder Filter, reicht für scharfe Hell-Dunkel-Abfolgen aus. Für die Erzeugung von Sequenzen mit Streifen unterschiedlicher Helligkeit sind jedoch halbtransparente Filter vorzusehen, die gegebenenfalls drei oder mehr verschiedene Lichtdurchlässigkeiten sehr genau reproduziert aufweisen müssen.

Es ist vorzugsweise in einer Vorrichtung zur Durchführung des Verfahrens eine Leuchtwand vorgesehen, die in dem erfindungsgemäßen Verfahren für das Projizieren eines Musters mit regelmäßigen Sequenzen zum Einsatz kommt, und die anstelle einer Lichtquelle mit Raster einsetzbar ist. Die Leuchtwand besteht zweckmäßigerweise aus einer Vielzahl von einzelnen LEDs, die beliebig einzeln, blockweise oder in Spalten bzw. Zeilen ansteuerbar sind, um entweder gemäß einem Hell-Dunkel-Profil zu leuchten bzw. nicht zu leuchten oder um in Abhängigkeit einer geeigneten Kennlinie unterschiedliche Intensitäten zu emittieren. Ähnliche Leuchtwände werden zum Beispiel als Anzeigetafeln in Sportstadien eingesetzt. Es versteht sich, daß die Vorrichtung zur Ermittlung von optischen Fehlern, umfassend eine Leuchtwand aus einer Mehrzahl einzeln ansteuerbarer Leuchtfelder als Flächenraster, das auf eine Scheibe projiziert wird, deren Brechkraft ermittelt werden soll, auch dann funktionsfähig ist, wenn sie mit einem Referenzraster aus dem Stand der Technik arbeitet. Es versteht sich, daß die Hell-Dunkel-Sequenz grundsätzlich mit jedem der beiden Raster darstellbar ist. Es versteht sich ferner, daß die Sequenzen auch über Linsen vergrößert werden können, bevor es zur eigentlichen Projektion kommt.

Soweit die Anzahl der erfindungsgemäß benachbart angeordneten Pixel die Summe von zwei übersteigt, versteht sich, daß jeweils nicht alle Pixel jeweils zueinander benachbart angeordnet sein können; vielmehr ist gemeint, daß die Pixel paarweise benachbart angeordnet sind derart, daß sie eine von nicht dazugehörigen Pixeln freie, zusammenhängende Sub-Zeile bzw. Sub-Matrix bilden.

Bei dem erfindungsgemäßen Verfahren ist vorzugsweise vorgesehen, daß jeweils ein ganzzahliges Vielfaches, vorzugsweise ein Tripel nebeneinander angeordneter Pixel mit einer Hell-Dunkel-Sequenz, vorzugsweise einem Hell-Dunkel-Paar, das von der Scheibe auf die Kamera abgebildet wird, übereinstimmt. Damit beträgt die Linienpaarbreite des projizierten Beleuchtungsmusters genau das Vielfache der Breite eines Pixels der Kamera, so daß es zu Moiré-Bildungen an der Kamera selbst kommt. Der Einsatz von Hell-Dunkel-Paaren hat den Vorteil, daß die Projektion sehr einfach durch das entsprechende Vorsehen eines Rasters mit nur zwei verschiedenen Lichtdurchlässigkeiten realisierbar ist, zweckmäßigerweise jeweils opake und transparente Bereiche, so daß ein guter Kontrast entsteht.

Erfindungsgemäß wird dieser Effekt ausgenutzt, um auf ein Referenzmuster verzichten zu können, wodurch der apparative Aufbau für eine Vorrichtung zur Durchführung des Verfahrens bereits stark vereinfacht wird, insbesondere der für den Aufbau erforderliche Raum.

Es ist zu verstehen, daß mehrere Wege für die Auswertung des Beleuchtungsmusters zur Verfügung stehen. Zum einen kann die Lichtintensität, die von jedem Pixel aufgenommen wird, der Weiterverarbeitung zugrundegelegt werden. Aufgrund der genauen Breitenverhältnisse lassen sich periodisch wiederkehrende Intensitätsverteilungen herstellen, bei deren Störung der der Störung zugrundeliegende Ablenkwinkel leicht ermittelt werden kann. Zur Ermittlung einer Störung kann sowohl ein Vergleich ohne Scheibe / mit Scheibe in Betracht kommen, als auch, bei genauer Ausrichtung der Anfangspunkte der Linienpaare mit einem Pixeitripel, die Kenntnis der Soll-Lichtintensitäten an jedem Punkt. Im zweiten Fall kann vorzugsweise auf eine Einrichtung mit einem Prüfnormal oder dergl. verzichtet werden.

Ein anderer, aufgrund seiner sehr guten Auflösung bevorzugter Weg der Weiterverarbeitung des Beleuchtungsmusters besteht in der Ausnutzung des an den Pixeln der Kamera auftretenden Moiré-Bildes. Das Moiré-Bild, das an der Kamera erfaßt wird, entsteht durch Überlagerung zweier Helligkeitsverteilungen mit spezifischer Periodizität, wobei über die Breite eines Linienpaares der Sequenz, die einer Hell-Dunkel-Periode entspricht, an dem "Gitter" der Pixel der Kamera der Verlauf näherungsweise einer Sinus-Kurve der Moiré-Struktur erkennbar wird. Es kann sich somit zunutze gemacht werden, daß mittels Moiré-Erscheinungen Deformationen in dem Muster, z.B. infolge von Brechungen in der Scheibe, mit einer um ein Vielfaches höheren Auflösung ermittelt werden können, die sich als Phasenverschiebung des Moiré-Bildes äußert, also als Stauchung oder Dehnung in der durch das Moiré-Bild entstehenden sinusförmigen Kurve.

Wird gemäß einer ersten bevorzugten Weiterbildung der Erfindung ein Linienpaar des Beleuchtungsmusters auf ein Tripel benachbarter Pixel abgebildet, entstehen somit für jedes Linienpaar 3 Moiré-Bildstreifen; es erübrigt sich dann, ein Referenzmuster um ein Drittel gegenüber dem projizierten Muster zu verschieben, statt dessen ist es vorteilhaft möglich, den Wert des zweiten bzw. des dritten Pixels als Wert für die um 120° bzw. 240° (oder -120°) verschobene Aufnahme zugrundezulegen. Diese um 120° (einem Drittel einer vollständigen Sinuskurve) versetzten, von den Pixeln der Kamera erfaßten Moiré-Bild-Streifen können durch einfache Umwandlung mathematisch als von einer Sinus-Funktion abhängige Kurven ausgedrückt werden.

Durch Schwankungen der Brechkraft der Scheiben, beispielsweise einer Windschutzscheibe eines Kraftfahrzeugs, kommt es zu Schwankungen in den Maxima und Minima, die durch die Moiré-Erscheinung auftreten, die sich leicht als Phasenverschiebung in der Sinuskurve ermitteln lassen; ist der Abstand der Kamera von der Scheibe bekannt, läßt sich hieraus der Winkel ermitteln, in dem das durchtretende Licht an der Scheibe gebrochen wird. Durch einfache weitere mathematische Bearbeitung (Differentiation) läßt sich damit die Brechkraft in Dioptrin ermitteln. Insbesondere für die Ermittlung der Brechkraft einer Windschutzscheibe ist dies von großer Bedeutung, denn eine Ablenkung des Blickes in der Vertikalen beeinträchtigt die Geradeaussicht, während eine Ablenkung des Lichts in der Horizontalen die Seitendurchsicht beeinträchtigt. In der DIN 52305 oder der ECE 43 sind Grenzwerte für die maximal zulässige Brechkraft des Glases angegeben, die als Schwellenwerte für einen Vergleich herangezogen werden können, ob eine geprüfte Windschutzscheibe angenommen oder abgelehnt wird.

Wird für das erfindungsgemäße Verfahren ein Muster eingesetzt, das Sequenzen sowohl in der Horizontalen als auch in der Vertikalen einander überlagernd anordnet, dann kann mit einer Matrixkamera gleichzeitig eine Auswertung der Brechkraft sowohl für die Vertikale als auch für die Horizontale vorgenommen werden, ohne daß hierfür die Kamera oder ein Referenzraster gedreht werden müßten. Dieselben Meßwerte der Pixel der Kamera können der Auswertung zugrundegelegt werden, wodurch für jede Auswertung eine Vielzahl an Speicherplatz gespart wird, und eine kompakte Archivierung der Meßdaten möglich ist. Wird die Zahl der einem Hell-Dunkel-Paar zugeordneten Pixel beispielsweise auf vier (fünf) oder größere Vielfache erhöht, wird eine Auswertung mit einem um jeweils 90° (72°) oder entsprechenden Bruchteilen davon verschobenen Phasenshiftverfahren ermöglicht. Im Falle von vier Pixeln ließe sich aufgrund des zusätzlich zur Verfügung stehenden Freiheitsgrads zusätzlich zu Position und Intensitätsextrema leicht die Frequenzverschiebung ermitteln.

Gemäß einer zweiten bevorzugten Weiterbildung der Erfindung ist es möglich, dieselbe Auflösung wie bei einem Tripel von Pixeln durch die Abbildung auf nur jeweils zwei benachbarte Pixel der Kamera zu erzielen. Hierfür ist das Muster nur geringfügig aufwendiger vorzusehen.

In einer ersten Variante ist es möglich, ein Muster mit Sequenzen aus drei Lichtintensitäten auszubilden, wobei diese Sequenz z.B. als drei äquidistante Streifen eines Rasters ausgebildet sein kann. Die Lichtdurchlässigkeiten des Rasters können z.B. jeweils um einen Faktor verschieden sein, beispielsweise 1%, 10%, 100% oder 10% bzw. 0%, 30% bzw. 33%, 90% bzw. 100%. Das von den beiden Pixeln erfaßte Signal läßt sich dann ebenfalls auf eine Sinuskurve rückführen, die eine anschließende Auswertung nach Phasenshiftverfahren zuläßt. Alternativ werden die Lichtintensitäten durch zeilenweise bzw. spaltenweise unterschiedlich stark leuchtende Felder eine Leuchtmatrix erzeugt.

In einer anderen Variante ist es möglich, in jeder Sequenz des Rasters mindestens einen beispielsweise nur für Licht einer bestimmten Wellenlänge (Farbe) transparenten, "ausschaltbaren Streifen" vorzusehen. Durch abwechselndes Beleuchten einmal mit hindurchtretendem Licht und einmal mit absorbiertem Licht wird das Größenverhältnis der Hell-Dunkel-Sequenz unter Beibehaltung ihrer für die Moiré-Erscheinung relevanten "Gitterkonstante" definiert verändert, wodurch sehr einfach Phasenverschiebungen im Moiré-Bild auswertbar werden. Beispielsweise besteht das Raster zur Erzeugung der Hell-Dunkel-Sequenz aus jeweils gleich breiten Streifen, die abwechselnd vollständig opak, für rotes, aber nicht für grünes Licht transparent und vollständig transparent ausgebildet sind. Es ist zum einen möglich, je eine Aufnahme bei Beleuchtung mit rotem bzw. mit grünem Licht vorzunehmen, und dann beide Bilder für die Auswertung zugrundezulegen. Einfacher ist es, in schneller Frequenzfolge abwechselnd rot und grün zu beleuchten, wodurch der "ausschaltbare Streifen" jeweils hell bzw. dunkel erscheint. Durch Integration der Lichtintensität in dem Pixel (das nur hell/dunkel erfaßt, also unabhängig von der Farbe des Lichts) läßt sich eine Phasenauswertung gemäß modifiziertem Phasenshiftverfahren vornehmen.

Eine dritte vorteilhafte Weiterbildung der Erfindung besteht darin, daß jeweils mindestens drei benachbarte Streifen (Zeilen bzw. Spalten) des Rastermusters (die dann eine Sequenz bilden) nacheinander beleuchtet werden, wobei eine entsprechende Anzahl Aufnahmen, also mindestens drei, von der Scheibe gemacht werden, und jede Sequenz auf ein Pixel abgebildet wird (oder auf ein ganzzahliges Vielfaches davon). Diese Weiterbildung läßt sich sowohl mit der vorstehend bereits geschilderten Beleuchtung eines Rasters mit von der Lichtfarbe abhängigen Lichtdurchlässigkeiten realisieren als auch mit einem physischen Filter, das um jeweils die Breite eines Streifens verschoben wird (es versteht sich, daß dann die Streifen äquidistant sind). Besonders vorteilhaft lassen sich Leuchtwände wie die oben beschriebenen einsetzen, die eine schnelle Abfolge der drei Aufnahmen gewährleisten bei gleichzeitig stets reproduzierbarer Lage. Außerdem können mit dieser Leuchtwand auch unmittelbar im Anschluß an die Aufnahmen für die vertikale diejenigen für die horizontale Brechkraft aufgenommen werden. Diese Weiterbildung hat den Vorteil, daß sie zum einen mit der bestehenden Auswertesoftware weiterarbeiten kann, zum anderen nur relativ wenig Kamerapixel benötigt, so daß sie preiswert umgesetzt werden kann. Eine Matrix-Leuchttafel ermöglicht es zum Beispiel auch, im Falle mehrerer, z.B. zueinander inverser, Aufnahmen die Belichtungszeit der Kamera und die Dauer der Beleuchtung im Raster zu synchronisieren. Wenn eine Scheibe mit einer Zeilenkamera abgetastet wird, beispielsweise von oben nach unten, kann dann für jede abgetastete Zeile jede Sequenz einmal beleuchtet werden, wodurch die Auswertung jeder aufgenommenen Sequenz praktisch on-line möglich ist, und die Kamera nur einmal verschwenkt oder verlagert werden muß, um die Scheibe abzutasten.

Es ist gemäß einer weiteren bevorzugten Weiterbildung der Erfindung möglich, auf der Grundlage des vorstehend erläuterten Verfahren eine Vorrichtung zum Ermitteln der Brechkraft in Autoglasscheiben, insbesondere Windschutzscheiben, derart auszubilden, daß das Raster beispielsweise ein Muster mit einer Streifensequenz aufweist, die aus rotem, grünem und blauem im übrigen transparentem Material besteht, so daß die entsprechende Farbe von Licht an dem jeweiligen Streifen nicht durchtritt, und eine Kamera diesen Streifen als "dunkel" registriert. Mit einer Farbkamera läßt sich so bereits für jede der drei Farben ein um ein Drittel verschobenes Hell-Dunkel-Streifenmuster (jeweils eine Sequenz auf zwei benachbarte Pixel) aufnehmen und das resultierende Moiré-Bild anschließend auswerten. Es versteht sich, daß dann die Sequenz der drei Farben auf wenigstens ein Pixel der Kamera oder ein Vielfaches davon abgebildet wird. Alternativ ist es auch möglich, das Raster dann abwechselnd, z.B. mittels LED, mit den drei entsprechenden Farben zu beleuchten, so daß der jeweils entsprechende Streifen dunkel, und die anderen beiden Streifen hell erscheinen. Es ist dann bei einer schwarzweiß Zeilen- oder Matrixkamera zweckmäßig, der Auswertung zwecks Ermittelbarkeit einer Phase mehr als eine Aufnahme mit der Kamera zugrundezulegen.

Die erfindungsgemäßen Verfahren ermöglichen es, sehr genau und sehr schnell die gewünschten Brechkraftindizes zu ermitteln, und sind daher insbesondere für den Einsatz an Kraftfahrzeugscheiben aus vorgespanntem Glas oder aus Verbundsicherheitsglas geeignet sowie für Planglas aus Float-, Ziehoder Walzglasfertigung, Acrylglas oder PVC, LCD-Displays etc. Es ist allerdings auch möglich, mit den erfindungsgemäßen Verfahren andere transparente Materialien auf ihre Brechkraft hin zu untersuchen, was sich insbesondere für Sehhilfen aus Glas oder Kunststoff anbietet und für große Teleskopspiegel, für transparente Kanzeln in Flugzeugen oder Motorradheimen, etc.

Weitere Ausgestaltungen der Erfindung sind der nachfolgenden Beschreibung und den Unteransprüchen zu entnehmen.

Die Erfindung wird nachstehend anhand von in den beigefügten Abbildungen dargelegtem Prinzipskizzen näher erläutert.

Fig. 1 zeigt schematisch den Strahlengang einer Vorrichtung zur Durchführung des erfindungsgemäßen Verfahrens.

Fig. 2 und Fig. 3 zeigen das Verhältnis von Sequenzen eines Beleuchtungsmusters und Kamerapixel für ein ein- bzw. ein zweidirnensionales Verfahren.

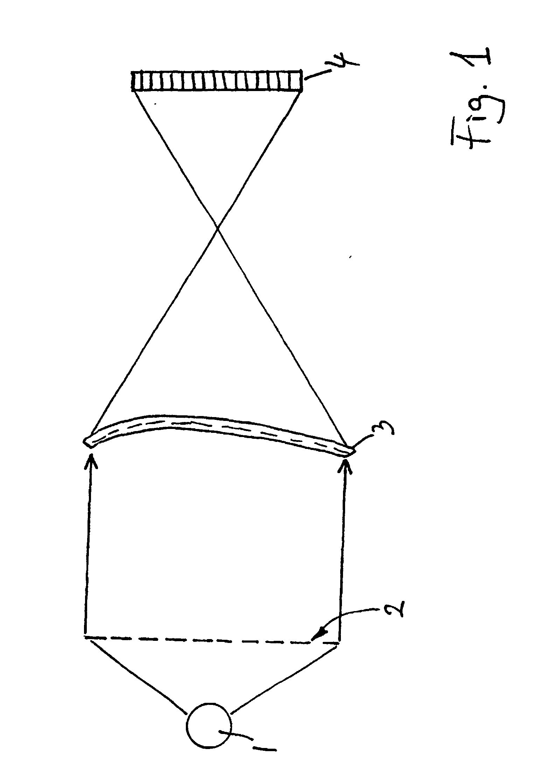

Bezugnehmend auf Fig. 1 erkennt man eine Lichtquelle 1, die ein als Kreuzraster ausgebildetes Beleuchtungsraster 2 anstrahlt, von dem aus paralleles Licht auf die in dem Strahlengang angeordnete Windschutzscheibe 3 fällt. Es versteht sich, daß anstelle der Windschutzscheibe 3 auch jeder andere Gegenstand gemessen werden kann, der zumindest für Licht bestimmter Wellenlängen, vorzugsweise im sichtbaren Bereich, transparent ist.

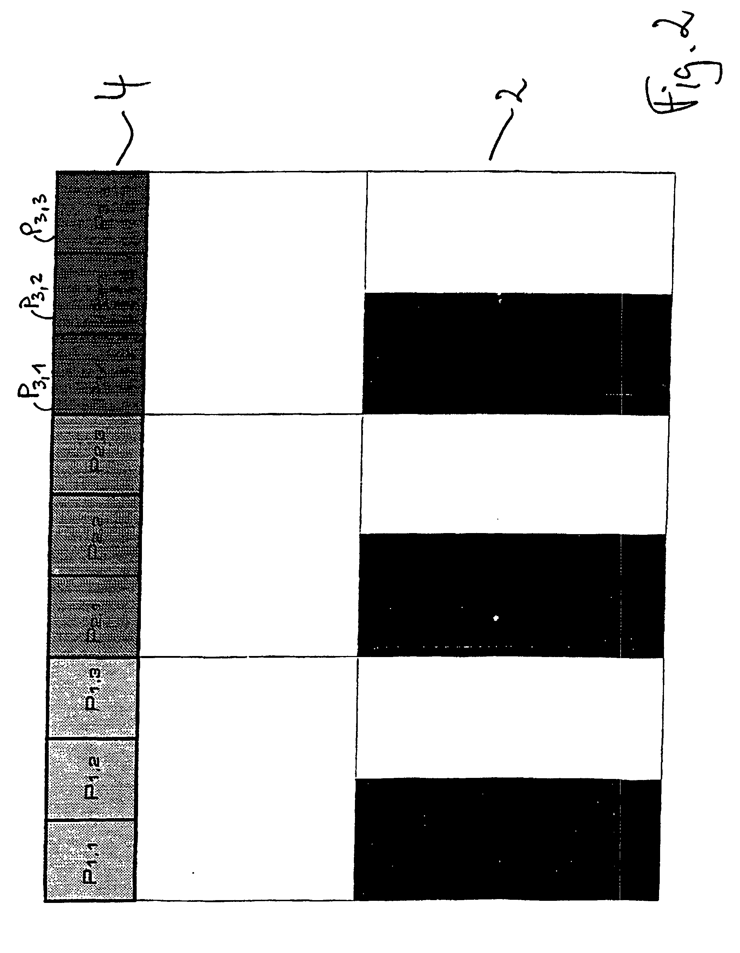

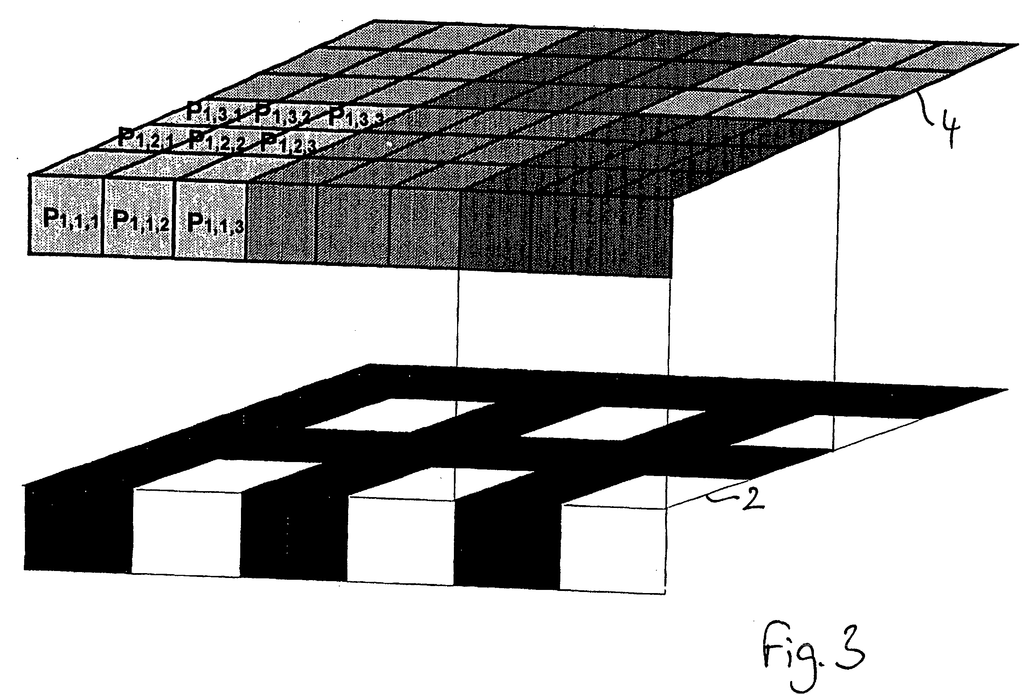

Das Kreuzraster 2 rastert das von der Lichtquelle 1 eintreffende Licht derart auf, daß nur ein Viertel des Lichtes durchtritt, während die übrigen drei Viertel des Lichtes von horizontalen opaken Streifen und vertikalen opaken Streifen, die sich kreuzen und die transparenten Quadrate eingrenzen, am Durchtritt gehindert werden. Die Kantenlänge der transparenten Quadrate und der opaken Streifen ist identisch. Damit ergibt sich ein Hell-Dunkel-Muster, wie in den Fig. 2 und 3 zu erkennen.

Die Abmessungen des Rasters 2 entsprechen in etwa der Größe des zu messenden Gegenstands.

Das Raster 2 wird durch die Windschutzscheibe 3 direkt und ohne Zwischenschaltung eines Referenzrasters auf eine Kamera 4 abgebildet, die die Hell-Dunkel-Intervalle auf der Windschutzscheibe aufnimmt. Es versteht sich, daß anstelle opaker und transparenter Linien auch allgemein Linien unterschiedlicher Transparenz Verwendung finden können, ggf. auch bezüglich nur eines bestimmten Frequenzspektrums, für das die Kamera 4 empfindlich ist.

Bei einer "idealen" Windschutzscheibe würde das Bild des Kreuzrasters 2 unverändert auf die Kamera projiziert werden. Das Kreuzraster 2 und die Kamera 4 sind derart aufeinander abgestimmt, daß jeweils ein Paar von Hell-Dunkel-Streifen auf drei benachbarte Pixel der Kamera 4 abgebildet wird, wie dies in den Figuren 2 und 3 deutlicher zu erkennen ist. Ausgehend von den einzelnen Pixeln, die mit P_{i,j} (Fig. 2) bzw. P_{i,j,k} (Fig. 3) bezeichnet sind, wobei i das i-te Streifenpaar des Kreuzrasters (bzw. das i-te Tripel von Pixeln) bezeichnet, j das j-te Pixel (j = 1, 2 oder 3) in dem Tripel bezeichnet in Richtung des Streifens und, im Falle einer Matrixkamera, k das k-te Pixel (k = 1, 2 oder 3) senkrecht zu der Erstreckung des j-ten Pixels bezeichnet für jeweils eine Zeile der Matrix aus Pixeln; es versteht sich, daß ferner ein Zeilenindex existiert. Diese Pixeladressen können auch in der anschließenden Auswertung der Matrix einzeln angesprochen werden.

Im Falle einer idealen Abbildung auf die Kamera 4 kommt es infolge des Umstands, daß die Gitterfrequenz der Kamerapixel und die Gitterfrequenz des Beleuchtungsrasters 2 Vielfache voneinander sind, zu einer regelmäßigen Moiré-Erscheinung, die an der Kamera registriert wird. Durch einfache Umformung der Meßwerte der Pixel in eine Funktion mit Sinusverlauf lassen sich Phasenverschiebungen sowie Dehnungen und Stauchungen der Sinuskurve ermittein.

Wenn aufgrund einer Lichtbrechung in der Scheibe die Abbildung auf die Kamera 4 nicht mehr ideal ist, sondern abweicht, kommt es zu einer Störung in der Moiré-Erscheinung an den Kamerapixeln, die als Phasenverschiebung am Ausgang der Kamerapixel erfaßbar ist und mit geringem Aufwand den Winkel ermitteln läßt, um den der Lichtstrahl abgelenkt wurde. Ausgehend von diesem Winkel läßt sich die Brechkraft in vertikaler Richtung, die die Geradeaussicht heeinflußt, und in horizontaler Richtung, die die Seitendurchsicht beeinflußt, der Windschutzscheibe durch Differentiation ermitteln.

Durch die Wahl des Verhältnisses ein Rasterlinienpaar (also 2 Linien, eine helle und eine dunkle) zu 3 Pixeln wird ein sehr gutes Verhältnis der Breitenabmessungen zueinander ermöglicht, wodurch die Auflösung der Meßwerte bzw. die zulässige Größe der zu messenden Windschutzscheibe 3 sehr groß wird. Der apparative Aufwand für die Vorrichtung bleibt gering.

Es versteht sich, daß anstelle von Hell-Dunkel-Paaren oder des Kreuzrasters 2 auch Raster mit mehreren Helligkeitsabstufungen durch Sequenzen mit mehr als zwei Lichtintensitäten vergleichbar eingesetzt werden können. Entsprechend kann die Anzahl der Pixel je Hell-Dunkel-Paar bzw. -Sequenz auch vier, fünf, ... betragen.

Es versteht sich ferner, daß anstelle der Anordnung mit Lichtquelle 1 und Raster 2 auch eine der Größe des Rasters entsprechende Tafel mit einer LED-Matrix eingesetzt werden könnte, wodurch vorteilhaft die einzelnen LED-Streifen über spezifische elektrische Kontakte ansteuerbar werden. Auch andere Mittel zum Erzeugen eines Lichtmusters sind also anstelle eines beleuchteten Rasters möglich. Das Raster weist den Vorteil auf, daß einfache geometrische Formen wie Linien auch bei hohen Anforderungen an die Präzision billig herstellbar sind.

## Patentansprüche

1. Verfahren zur Ermittlung von optischen Fehlern, insbesondere der Brechkraft, in großflächigen Scheiben aus einem transparenten Werkstoff wie Glas mittels einer Auswertung des beobachteten Bildes, umfassend die Schritte
Projizieren eines definierten Musters aus regelmäßigen Sequenzen, wobei die Sequenzen wenigstens zwei unterschiedliche Lichtintensitäten umfassen;
Anordnen der Scheibe in den Strahlengang der Projektion; und
Abbilden von Sequenzen des Musters auf Pixel einer Kamera,
**dadurch gekennzeichnet,**
**daß** eine Sequenz jeweils auf eine ganzzahlige Anzahl benachbart angeordneter Pixel abgebildet ist, und
**daß** die Anzahl ein ganzzahliges Vielfaches der Sequenz ist.

2. Verfahren nach Anspruch 1, **dadurch gekennzeichnet, daß** die Sequenz des Musters wenigstens zwei Lichtintensitäten umfaßt, und daß das ganzzahlige Vielfache wenigstens drei beträgt.

3. Verfahren nach Anspruch 1 oder 2, **dadurch gekennzeichnet, daß** für die Erstellung des Musters ein Raster vorgesehen ist, und daß das Raster äquidistante opake und transparente Streifen zur Erzeugung einer regelmäßigen Hell-Dunkel-Projektion umfaßt.

4. Verfahren nach einem der Ansprüche 1 bis 3, **dadurch gekennzeichnet, daß** für die Erstellung des Musters ein Raster vorgesehen ist, und daß das Raster transparente Quadrate umfaßt, die von opaken Linien mit derselben Breite wie die Quadrate begrenzt sind, so daß im wesentlichen ein Viertel des Rasters transparent ist, und daß die Kamera eine Zeilenoder Matrixkamera ist.

5. Verfahren nach Anspruch 4, **dadurch gekennzeichnet, daß** eine zweidimensionale Sequenz des Musters aus einem transparenten Quadrat und zwei sich kreuzenden opaken Linien besteht, wobei der Flächenbereich der sich kreuzenden Linien mit dem transparenten Quadrat deckungsgleich ist.

6. Verfahren nach Anspruch 5, **dadurch gekennzeichnet, daß** die zweidimensionale Sequenz auf jeweils benachbarte n × n Pixel einer Matrixkamera abgebildet werden, wobei n ein ganzzahliges Vielfaches der Sequenz größer zwei ist.

7. Verfahren nach einem der Ansprüche 1 oder 2, **dadurch gekennzeichnet, daß** für die Erstellung des Musters ein Raster vorgesehen ist, und daß das Raster als Schachbrettmuster aus opaken und transparenten deckungsgleichen Quadraten gebildet ist, und daß die Kamera eine Zeilen- oder Matrixkamera ist.

8. Verfahren nach Anspruch 7, **dadurch gekennzeichnet, daß** ein quadratischer Flächenbereich bestehend aus zwei Paaren diagonal zueinander versetzt angeordneter heller und dunkler Quadrate auf jeweils benachbarte n × n Pixel einer Matrixkamera abgebildet wird, wobei n eine ganze Zahl größer zwei ist.

9. Verfahren nach Anspruch 1, **dadurch gekennzeichnet, daß** eine Sequenz wenigstens drei verschiedene Lichtintensitäten umfaßt, daß das Vielfache wenigstens zwei beträgt, und daß die Kamera eine Zeilen- oder Matrixkamera ist.

10. Verfahren nach Anspruch 1 oder 9, **dadurch gekennzeichnet, daß** für die Erstellung des Musters ein Raster vorgesehen ist, und daß das Raster ein Streifenmuster verschiedener Lichtdurchlässigkeiten umfaßt.

11. Verfahren nach Anspruch 10, **dadurch gekennzeichnet, daß** das Raster senkrecht zu dem Streifenmuster ein zweites Streifenmuster verschiedener Lichtdurchlässigkeiten umfaßt, so daß sich aus der Überlagerung der Streifenmuster ein Muster aus Rechtecken unterschiedlicher Lichtdurchlässigkeiten mit insgesamt wenigstens drei verschiedenen Lichtdurchlässigkeiten ergibt.

12. Verfahren nach Anspruch 10 oder 11, **dadurch gekennzeichnet, daß** die Lichtdurchlässigkeit des Rasters für Licht in Abhängigkeit von dessen Wellenlänge oder Farbe verschieden ist.

13. Verfahren nach einem der Ansprüche 1 bis 12, **dadurch gekennzeichnet, daß** eine Aufnahme für die Auswertung eines Moiré-Bildes an den Pixeln der Kamera zugrundegelegt wird.

14. Verfahren nach einem der Ansprüche 9 bis 12, **dadurch gekennzeichnet, daß** zwei Aufnahmen für die Auswertung eines Moiré-Bildes an den Pixeln der Kamera zugrundegelegt werden.

15. Verfahren nach Anspruch 1, **dadurch gekennzeichnet, daß** das Muster aus einer Vielzahl von selektiv derart ansteuerbaren Streifen besteht, daß jeder Streifen entweder hell oder dunkel erscheint, daß jeder n-te Streifen der Sequenz gleichzeitig beleuchtet wird, wobei n wenigstens gleich drei ist, und daß n benachbarte Streifen sukzessive auf genau ein Pixel der Kamera oder ein ganzzahliges Vielfaches davon abgebildet werden.

16. Verfahren nach einem der Ansprüche 1, 2, 9 oder 15, **dadurch gekennzeichnet, daß** die Projektion der Sequenzen des Musters durch das selektive zeilen- und/oder spaltenweise ansteuern einer als Leuchtmatrix ausgebildeten Leuchtwand erfolgt, und die Projektion der LED-Wand direkt auf die Scheibe gerichtet ist.

17. Verfahren nach einem der Ansprüche 1 bis 16, **dadurch gekennzeichnet, daß** die Kamera eine Zeilen- oder Matrixkamera ist, die zum Abtasten einer Mehrzahl von Sequenzen verlagert oder verschwenkt wird.

18. Verfahren nach einem der Ansprüche 1 bis 17, **gekennzeichnet durch** einen Auswerteschritt, in dem ausgehend von der auf den Pixeln der Kamera auftretenden Phasenverschiebung gegenüber dem Beleuchtungsmuster eine Brechkraftänderung in der Scheibe an dem entsprechenden Ort ermittelt wird.

19. Verfahren nach Anspruch 18, **dadurch gekennzeichnet, daß** der Auswerteschritt die Bildung der Differenz des Phasenverlaufs des Bildes mit lichtbrechender Scheibe zu einem Zustand ohne Lichtbrechung umfaßt.

20. Verfahren nach Anspruch 18 oder 19, **dadurch gekennzeichnet, daß** die Brechkraft durch Differentiation des Winkels ermittelt wird, um den der Lichtstrahl in der Scheibe abgelenkt wird.

21. Verfahren nach einem der Ansprüche 1 bis 20, **dadurch gekennzeichnet, daß** die Scheibe planes oder gebogenes Flachglas oder Kunststoff ist.

22. Verfahren nach einem der Ansprüche 1 bis 21, **dadurch gekennzeichnet, daß** die Kamera eine Farbkamera ist, und daß die Auswertung desselben Bildes bezüglich unterschiedlicher aufgenommener Farben erfolgt.

## Claims

1. A method for determining optical errors, in particular in the refractive power, in large-area panes composed of a transparent material such as glass, by evaluation of the observed image, comprising the following steps:
projection of a defined pattern composed of regular sequences, with the sequences comprising at least two different light intensities;
arrangement of the pane in the beam path of the projection; and
imaging of sequences of the pattern on pixels of a camera,
**characterised in**
**that** a sequence in each case is imaged on an integer number of adjacently arranged pixels, and
**that** the number is an integer multiple of the sequence.

2. The method as claimed in claim 1, **characterised in that** the sequence of the pattern comprises at least two light intensities, and that the integer multiple is at least three.

3. The method as claimed in claim 1 or 2, **characterised in that** a grid is provided for producing the pattern, and that the grid comprises equidistant opaque and transparent strips in order to produce a regular light/dark projection.

4. The method as claimed in one of claims 1 to 3, **characterised in that** a grid is provided for producing the pattern, and that the grid comprises transparent squares which are bounded by opaque lines having the same width as the squares, so that essentially one quarter of the grid is transparent, and that the camera is a line-scan camera or matrix camera.

5. The method as claimed in claim 4, **characterised in that** a two-dimensional sequence of the pattern comprises a transparent square and two crossing opaque lines, with the surface area of the crossing lines being coincident with the transparent square.

6. The method as claimed in claim 5, **characterised in that** the two-dimensional sequence is imaged on respectively adjacent n x n pixels of a matrix camera, where n is an integer multiple of the sequence, greater than two.

7. The method as claimed in one of claims 1 or 2, **characterised in that** a grid is provided for producing the pattern, and that the grid is formed as a checkerboard pattern composed of opaque and transparent coincident squares, and that the camera is a line-scan camera or matrix camera.

8. The method as claimed in claim 7, **characterised in that** a square surface area comprising two pairs of light and dark squares, which are arranged diagonally offset with one another, are imaged on respectively adjacent n × n pixels of a matrix camera, where n is integer greater than two.

9. The method as claimed in claim 1, **characterised in that** a sequence comprises at least three different light intensities, that the multiple is at least two, and that the camera is a line-scan camera or matrix camera.

10. The method as claimed in claim 1 or 9, **characterised in that** a grid is provided for producing the pattern, and that the grid comprises a strip pattern of different light permeabilities.

11. The method as claimed in claim 10, **characterised in that** the grid comprises a second strip pattern of different light permeabilities at right angles to the strip pattern, so that the superimposition of the strip patterns produces a pattern of rectangles of different light permeabilities, with at least three different light permeabilities overall.

12. The method as claimed in claim 10 or 11, **characterised in that** the light permeability of the grid varies as a function of the wavelength or colour of the light.

13. The method as claimed in one of claims 1 to 12, **characterised in that** a record for the evaluation of a moiré image is based on the pixels of the camera.

14. The method according to one of claims 9 to 12, **characterised in that** two records for the evaluation of a moiré image are based on the pixels of the camera.

15. The method as claimed in claim 1, **characterised in that** the pattern comprises a large number of strips which can be actuated selectively in such a manner that each strip appears either light or dark, that each n-th strip in the sequence is illuminated at the same time, where n is at least equal to three, and that n adjacent strips are imaged successively on just one pixel of the camera, or on an integer multiple thereof.

16. The method as claimed in one of claims 1, 2, 9 or 15, **characterised in that** the sequences of the pattern are projected by selectively actuating lines and/or columns of a light wall which is designed as a light matrix, and a projection of the LED wall is pointed directly at the pane.

17. The method as claimed in one of claims 1 to 16, **characterised in that** the camera is a line-scan camera or matrix camera which is moved or pivoted in order to scan a plurality of sequences.

18. The method as claimed in one of claims 1 to 17, **characterised by** an evaluation step, in which a change in the refractive power with respect to an illumination pattern in the pane is determined at the corresponding point on the basis of the phase shift which occurs on the pixels of the camera.

19. The method as claimed in claim 18, **characterised in that** the evaluation step comprises the formation of the difference in the phase profile of the image with a light-refracting pane to a state without light refraction.

20. The method as claimed in claim 18 or 19, **characterised in that** the refractive power is determined by differentiation of the angle through which the light beam is deflected in the pane.

21. The method as claimed in one of claims 1 to 20, **characterised in that** the pane is planar or curved sheet glass or plastic.

22. The method as claimed in one of claims 1 to 24, **characterised in that** the camera is a colour camera, and that the evaluation of the same image is carried out with respect to the different recorded colours.

## Revendications

1. Procédé de détection d'erreurs optiques, en particulier de la réfringence, dans des plaques de grande surface en matière transparente, comme le verre, en exploitant l'image observée, comportant les étapes consistant à
projeter un motif défini constitué de séquences régulières, les séquences présentant au moins deux intensités lumineuses ;
agencer la plaque dans le trajet de faisceau de la projection ; et
représenter des séquences du motif sur des pixels d'une caméra,
**caractérisé en ce qu'**une séquence est à chaque fois représentée sur un nombre entier de pixels voisins, et **en ce que** le nombre est un multiple entier de la séquence.

2. Procédé selon la revendication 1, **caractérisé en ce que** la séquence du motif présente au moins deux intensités lumineuses, et **en ce que** le nombre entier est au moins trois.

3. Procédé selon la revendication 1 ou 2, **caractérisé en ce qu'**il est prévu une trame pour réaliser le motif, et **en ce que** la trame comporte des bandes opaques et transparentes équidistantes en vue de générer une projection claire et foncée régulière.

4. Procédé selon l'une des revendications 1 à 3, **caractérisé en ce qu'**il est prévu une trame pour réaliser le motif, et **en ce que** la trame comporte des carrés transparents qui sont limités par des lignes opaques de même largeur que les carrés de sorte que sensiblement un quart de la trame est transparente, et **en ce que** la caméra est une caméra linéaire ou matricielle.

5. Procédé selon la revendication 4, **caractérisé en ce qu'**une séquence bidimensionnelle du motif se compose d'un carré transparent et des deux lignes opaques qui se croisent, la zone de surface des lignes qui se croisent coïncidant avec le carré transparent.

6. Procédé selon la revendication 5, **caractérisé en ce que** la séquence bidimensionnelle est représentée à chaque fois sur n x n pixels voisins d'une caméra matricielle, n étant un multiple entier de la séquence supérieur à 2.

7. Procédé selon l'une des revendications 1 ou 2, **caractérisé en ce qu'**il est prévu une trame pour réaliser le motif, et **en ce que** la trame est conformée en motif quadrillé constitué de carrés coïncidents opaques et transparents, et **en ce que** la caméra est une caméra linéaire ou matricielle.

8. Procédé selon la revendication 7, **caractérisé en ce qu'**une zone de surface carrée constituée de deux paires de carrés clairs et foncés, agencés en étant décalés suivant une diagonale, est représentée à chaque fois sur n x n pixels voisins d'une caméra matricielle, n étant un nombre entier supérieur à 2.

9. Procédé selon la revendication 1, **caractérisé en ce qu'**une séquence présente au moins trois intensités lumineuses différentes, **en ce que** le multiple est au moins deux, et **en ce que** la caméra est une caméra linéaire ou matricielle.

10. Procédé selon la revendication 1 ou 9, **caractérisé en ce que** pour réaliser le motif il est prévu une trame, et **en ce que** la trame comporte un motif de bandes de différentes transparences.

11. Procédé selon la revendication 10, **caractérisé en ce que** la trame comporte un second motif de bandes de différentes transparences perpendiculaire au premier motif de bandes de sorte qu'un motif de rectangles de différentes transparences, avec dans l'ensemble au moins trois transparences différentes ,est obtenu à partir de la superposition des motifs de bandes.

12. Procédé selon la revendication 10 ou 11, **caractérisé en ce que** la transparence de la trame à la lumière en fonction de sa longueur d'onde ou de sa couleur est différente.

13. Procédé selon l'une des revendications 1 à 12, **caractérisé en ce qu'**un enregistrement destiné à l'exploitation d'une image moirée repose sur les pixels de la caméra.

14. Procédé selon l'une des revendications 9 à 12, **caractérisé en ce que** deux enregistrement destinés à l'exploitation d'une image moirée repose sur les pixels de la caméra.

15. Procédé selon la revendication 1, **caractérisé en ce que** le motif se compose d'un grand nombre de bandes commandées sélectivement de sorte que chaque bande semble claire ou foncée, **en ce que** toutes les n-ièmes bandes de la séquence sont éclairées simultanément, n étant au moins égal à 3, et **en ce que** n bandes voisines sont représentées successivement sur précisément un pixel de la caméra ou un multiple entier de celui-ci.

16. Procédé selon l'une de revendications 1, 2, 9 ou 15, **caractérisé en ce que** la projection des séquences du motif est effectuée en commandant sélectivement les lignes et/ou les colonnes d'une paroi luminescente conformée en matrice luminescente , et la projection de LED est dirigée directement vers la plaque.

17. Procédé selon l'une des revendications 1 à 16, **caractérisé en ce que** la caméra est une caméra linéaire ou matricielle qui est déplacée ou qui balaie horizontalement en vue d'explorer une pluralité de séquences.

18. Procédé selon l'une des revendications 1 à 17, **caractérisé par** une étape d'exploitation dans laquelle une variation de réfringence dans le disque à l'endroit correspondant est détectée à partir du déphasage survenant sur les pixels de la caméra par rapport au motif d'éclairement.

19. Procédé selon la revendication 18, **caractérisé en ce que** l'étape d'exploitation comporte la formation de la différence du profil de phases de l'image avec un disque réfringent par rapport à un état sans réfringence.

20. Procédé selon la revendication 18 ou 19, **caractérisé en ce que** la réfringence est déterminée par différenciation de l'angle de déviation du faisceau lumineux dans le disque.

21. Procédé selon l'une des revendications 1 à 20, **caractérisé en ce que** le disque est réalisé à partir de matière plastique ou de verre laminé plan ou incurvé.

22. Procédé selon l'une des revendications 1 à 21, **caractérisé en ce que** la caméra est une caméra couleur, et **en ce que** l'exploitation de la même image est effectuée vis-à-vis des différentes couleurs enregistrées.
